# EUROPEAN PATENT APPLICATION

(11) **EP 4 836 329 A1**
(43) Date of publication of application: **04.11.2026**
(21) Application number: 24918338.5
(22) Date of filing: 24.12.2024
(51) Int. Cl.: H04L 1/00

(54) **DATA PROCESSING METHOD AND APPARATUS**

(30) Priority: 19.01.2024 CN 202410083451
(71) Applicant: Huawei Technologies Co., Ltd., Shenzhen, Guangdong 518129 (CN)
(72) Inventor: LI, Liang, Shenzhen, Guangdong 518129 (CN); KOU, Hanjun, Shenzhen, Guangdong 518129 (CN); LU, Yuchun, Shenzhen, Guangdong 518129 (CN)
(74) Representative: Isarpatent
(86) International application number: PCT/CN2024/141818
(87) International publication number: WO 2025/152730

(57) **Abstract**

Embodiments of this application provide a data processing method. The method may be applied to a first communication apparatus. The first communication apparatus may obtain a first FEC codeword transmitted by a second communication apparatus. The first communication apparatus does not decode the first FEC codeword based on a conventional FEC decoding scheme, but decodes the first FEC codeword based on a first allocation relationship. The first allocation relationship indicates an allocation relationship between a first error correction capability and a first error detection capability for processing the first FEC codeword. The first error correction capability indicates a maximum quantity of error symbols capable of being corrected in a cyclic codeword, and the first error detection capability indicates a maximum quantity of error symbols capable of being detected in a cyclic codeword. In other words, in embodiments of this application, an error correction capability and an error detection capability for decoding the cyclic codeword may be flexibly allocated, so that performance provided by an FEC technology can meet a requirement.

## Description

This application claims priority to Chinese Patent Application No. 202410083451.X, filed with the China National Intellectual Property Administration on January 19, 2024 and entitled "DATA PROCESSING METHOD AND APPARATUS", which is incorporated herein by reference in its entirety.

### BACKGROUND

With the development of information technologies such as cloud computing, big data, artificial intelligence, and internet of things, more data is transmitted in the Ethernet. Due to some non-ideal characteristics of transmission channels, such as a transmission loss, crosstalk, and noise, signals are distorted after passing through the channels, resulting in bit errors. Especially for highspeed links, a signal undergoes severe distortion after channel transmission, resulting in a high bit error rate.

Forward error correction (forward error correction, FEC) is an important technology for ensuring correct information transmission and improving channel bit error performance in communication links. FEC refers to an error control technology in which signals are pre-encoded according to an algorithm before being sent to transmission channels, with redundant bits carrying inherent signal features, and the received signals are decoded on a receiving side according to corresponding algorithms, thereby implementing error detection and correction of data.

Current FEC technologies fail to meet performance requirements. Therefore, there is an urgent need for a solution to resolve the foregoing problem.

### SUMMARY

Embodiments of this application provide a data processing method, to improve performance provided by FEC.

According to a first aspect, an embodiment of this application provides a data processing method. The method may be applied to a first communication apparatus. The first communication apparatus may obtain a first FEC codeword transmitted by a second communication apparatus. The first communication apparatus does not decode the first FEC codeword based on a conventional FEC decoding scheme, but decodes the first FEC codeword based on a first allocation relationship. The first allocation relationship indicates an allocation relationship between a first error correction capability and a first error detection capability for processing the first FEC codeword. The first error correction capability indicates a maximum quantity of error symbols capable of being corrected in a cyclic codeword, and the first error detection capability indicates a maximum quantity of error symbols capable of being detected in a cyclic codeword. In other words, in embodiments of this application, an error correction capability and an error detection capability for decoding the cyclic codeword may be flexibly allocated, so that performance provided by an FEC technology can meet a requirement.

In a possible implementation, to ensure error detection performance of the communication apparatus, the first error correction capability may be less than the first error detection capability. In this case, a maximum quantity of error symbols capable of being detected by the first communication apparatus may be larger, thereby improving error detection performance of the first communication apparatus. Correspondingly, a requirement of the Ethernet standard for MTTFPA can be more easily met.

In a possible implementation, in some scenarios, when a conventional FEC decoding scheme is used, error correction performance is redundant, and error detection performance cannot meet the requirement of the Ethernet standard for the mean time to false packet acceptance (mean time to false packet acceptance, MTTFPA). Therefore, to make error detection performance provided by the FEC meet the requirement of the Ethernet standard for the MTTFPA as much as possible, a redundant error correction capability may be reduced based on the conventional FEC decoding scheme, to improve an error detection capability. Therefore, in an example, the first error correction capability may be less than the first error detection capability.

In a possible implementation, the first allocation relationship may be determined based on link quality between the first communication apparatus and the second communication apparatus. To be specific, the first communication apparatus may dynamically adjust, based on the link quality, an allocation relationship between an error correction capability and an error detection capability for processing a specific-type cyclic codeword, to obtain the first allocation relationship, so that when the specific-type cyclic codeword is decoded based on the first allocation relationship, the obtained link quality meets a link quality requirement.

In a possible implementation, because a link bit error rate and a quantity of data frame retransmissions may reflect the link quality, the link quality may include the link bit error rate and/or the quantity of data frame retransmissions. Correspondingly, that the link quality meets the link quality requirement may be that the link bit error rate meets a bit error rate requirement and/or the quantity of data frame retransmissions meets a retransmission quantity requirement.

In a possible implementation, if the first allocation relationship meets the link quality requirement, that is, when the specific-type cyclic codeword is decoded based on the first allocation relationship, the link quality between the first communication apparatus and the second communication apparatus meets the link quality requirement, to further improve error correction performance to make error detection performance provided by the FEC meet the requirement of the Ethernet standard for the MTTFPA as much as possible, the first error correction capability in the first allocation relationship may be further reduced, to improve the first error detection capability in the first allocation relationship, so as to obtain a second allocation relationship. In this way, the specific-type cyclic codeword is subsequently decoded based on the second allocation relationship. Because the first error correction capability is reduced, when the specific-type cyclic codeword is processed based on the second allocation relationship, the link quality between the first communication apparatus and the second communication apparatus is reduced. In this embodiment of this application, the first error correction capability is not reduced without limitation. Instead, it may be controlled that the second allocation relationship can still meet the link quality requirement after the first error correction capability is reduced.

In a possible implementation, in a specific implementation in which the first communication apparatus decodes the first FEC codeword based on the first allocation relationship, error correction may be first performed on the first FEC codeword based on the first error correction capability, to obtain a second FEC codeword. Then, error detection is performed on the second FEC codeword based on a second error detection capability, where the second error detection capability is equal to a difference between a maximum error correction capability and the first error correction capability.

In a possible implementation, P represents the second error detection capability, that is, the second error detection capability is P. In this case, in a specific implementation of "performing error detection on the second FEC codeword based on the second error detection capability", 2*P syndromes may be calculated based on the second FEC codeword. Further, it is determined, based on the 2*P syndromes, whether an error exists in the second FEC codeword. Specifically, if all the 2*P syndromes are 0, it may be determined that the second FEC codeword includes no error codeword; or if not all the 2*P syndromes are 0, it may be determined that the second FEC codeword includes an error codeword.

In a possible implementation, because a Reed-Solomon (Reed-Solomon, RS) code is currently a common encoding scheme in FEC, the first FEC codeword may be an RS code.

In a possible implementation, a sum of the first error correction capability and the first error detection capability is equal to dmim-1, and dmin is a minimum Hamming distance between RS codes. In other words, a sum of an error correction capability and an error detection capability provided by the RS code is a fixed value. Therefore, if the error correction capability is reduced, the error detection capability may be correspondingly improved.

In a possible implementation, if the first FEC codeword is RS (128, 120), a minimum Hamming distance of RS (128, 120) is 9. Therefore, the sum of the first error correction capability and the first error detection capability is 8. Therefore, in an example, the first error correction capability may be 1, and the first error detection capability may be 7; in another example, the first error correction capability may be 2, and the first error detection capability may be 6; in another example, the first error correction capability may be 3, and the first error detection capability may be 5; and in another example, both the first error correction capability and the first error detection capability may be 4.

According to a second aspect, an embodiment of this application provides a data processing apparatus, used in a first communication apparatus. The first communication apparatus includes a receiving unit and a processing unit. The receiving unit is configured to obtain a first forward error correction FEC codeword transmitted by a second communication apparatus. The processing unit is configured to decode the first FEC codeword based on a first allocation relationship, where the first allocation relationship indicates an allocation relationship between a first error correction capability and a first error detection capability for processing the first FEC codeword, the first error correction capability indicates a maximum quantity of error symbols capable of being corrected in a cyclic codeword, and the first error detection capability indicates a maximum quantity of error symbols capable of being detected in a cyclic codeword.

In a possible implementation, the first error correction capability is less than the first error detection capability.

In a possible implementation, the first allocation relationship is determined based on link quality between the first communication apparatus and the second communication apparatus.

In a possible implementation, the first allocation relationship meets a link quality requirement, and the processing unit is further configured to: reduce the first error correction capability in the first allocation relationship and improve the first error detection capability in the first allocation relationship, to obtain a second allocation relationship, where the second allocation relationship meets the link quality requirement.

In a possible implementation, the link quality includes: a link bit error rate and/or a quantity of data frame retransmissions.

In a possible implementation, the processing unit is configured to: perform error correction on the first FEC codeword based on the first error correction capability, to obtain a second FEC codeword; and perform error detection on the second FEC codeword based on a second error detection capability, where the second error detection capability is equal to a difference between a maximum error correction capability and the first error correction capability.

In a possible implementation, performing error detection on the second FEC codeword based on the second error detection capability includes: calculating 2*P syndromes based on the second FEC codeword, where P corresponds to the second error detection capability; and if all the 2*P syndromes are 0, determining that the second FEC codeword includes no error codeword; or if not all the 2*P syndromes are 0, determining that the second FEC codeword includes an error codeword.

In a possible implementation, the first FEC codeword is a Reed-Solomon RS codeword.

In a possible implementation, a sum of the first error correction capability and the first error detection capability is equal to dmim-1, and dmin is a minimum Hamming distance between RS codes.

In a possible implementation, when the first FEC codeword is RS (128, 120), the first error correction capability is 1, and the first error detection capability is 7; or the first error correction capability is 2, and the first error detection capability is 6; or the first error correction capability is 3, and the first error detection capability is 5; or the first error correction capability is 4, and the first error detection capability is 4.

According to a third aspect, an embodiment of this application provides a device. The device includes a processor and a memory. The memory is configured to store instructions or a computer program. The processor is configured to execute the instructions or the computer program in the memory, to perform the method according to any one of the first aspect and the possible implementations of the first aspect.

According to a fourth aspect, an embodiment of this application provides an optical module, including an interface circuit and a processing circuit. The interface circuit is configured to receive and/or send data, and the processing circuit is configured to process the data. In a specific example, the interface circuit is configured to obtain a first forward error correction FEC codeword transmitted by a second communication apparatus, and the processing circuit is configured to decode the first FEC codeword based on a first allocation relationship, where the first allocation relationship indicates an allocation relationship between a first error correction capability and a first error detection capability for processing the first FEC codeword, the first error correction capability indicates a maximum quantity of error symbols capable of being corrected in a cyclic codeword, and the first error detection capability indicates a maximum quantity of error symbols capable of being detected in a cyclic codeword.

According to a fifth aspect, an embodiment of this application provides a physical layer (physical, PHY) chip. The PHY chip includes an interface circuit and a processing circuit. The interface circuit is configured to receive and/or send data, and the processing circuit is configured to process the data. In a specific example, the interface circuit is configured to obtain a first forward error correction FEC codeword transmitted by a second communication apparatus, and the processing circuit is configured to decode the first FEC codeword based on a first allocation relationship, where the first allocation relationship indicates an allocation relationship between a first error correction capability and a first error detection capability for processing the first FEC codeword, the first error correction capability indicates a maximum quantity of error symbols capable of being corrected in a cyclic codeword, and the first error detection capability indicates a maximum quantity of error symbols capable of being detected in a cyclic codeword.

According to a sixth aspect, an embodiment of this application provides a computer-readable storage medium, including instructions or a computer program. When the instructions or the computer program is run on a computer, the computer is caused to perform the method according to any one of the first aspect and the possible implementations of the first aspect.

According to a seventh aspect, an embodiment of this application provides a computer program product including instructions or a computer program. When the computer program product runs on a computer, the computer is caused to perform the method according to any one of the first aspect and the possible implementations of the first aspect.

### BRIEF DESCRIPTION OF DRAWINGS

To describe the technical solutions in embodiments of this application or in the conventional technology more clearly, the following briefly describes the accompanying drawings for describing embodiments or the prior art. It is clear that the accompanying drawings in the following description show some embodiments recorded in this application, and persons of ordinary skill in the art may still derive other drawings from these accompanying drawings without creative efforts.
FIG. 1a is a schematic flowchart of cyclic code decoding in a conventional technology;
FIG. 1b is a diagram of erroneous codeword correction according to an embodiment of this application;
FIG. 1c(a) to FIG. 1c(c) are diagrams of decoding effects according to an embodiment of this application;
FIG. 2 is a schematic flowchart of a data processing method according to an embodiment of this application;
FIG. 3 is a schematic flowchart of decoding according to an embodiment of this application;
FIG. 4 is another schematic flowchart of decoding according to an embodiment of this application;
FIG. 5 is a diagram of a structure of a data processing apparatus according to an embodiment of this application;
FIG. 6 is a diagram of a structure of an optical module according to an embodiment of this application;
FIG. 7 is a diagram of a structure of a PHY chip according to an embodiment of this application; and
FIG. 8 is a diagram of a structure of a device according to an embodiment of this application.

### DESCRIPTION OF EMBODIMENTS

Embodiments of this application provide a data processing method, to improve performance provided by FEC.

Currently, many encoding algorithms supporting the FEC technology are used. A cyclic code (cyclic code) is a type of code that has an error correction capability and an error detection capability and is currently deeply researched, theoretically mature, and widely used in various application scenarios. The cyclic code may include an RS code, a cyclic redundancy check (cyclic redundancy check, CRC) code, a BCH (English: bose-chaudhuri-hocquenghem) code, a fire code (fire code), and the like.

FEC may be used for error correction, and may also be used for error detection. However, in the current FEC, both error correction performance and error detection performance of a fixed code type are fixed, and generally, the error correction performance and the error detection performance are the same. The error correction performance refers to a maximum quantity of error symbols capable of being corrected in a cyclic codeword, and the error detection performance refers to a maximum quantity of error symbols capable of being detected in the cyclic codeword. For example, both error correction performance and error detection performance of a code type are *a*. This indicates that when there are a maximum of *a* error symbols in a codeword, the error symbols can be corrected to correct symbols, and when there are a maximum of *a* error symbols in the codeword, it can also be detected that a bit error occurs in the codeword. In this scenario, in an example, detecting that a bit error occurs in the codeword may be outputting an error detection result indicating that an error occurs in the codeword, and the error detection result may not necessarily indicate a specific error codeword in the codeword. In another example, the detection result may alternatively be used to locate a specific error codeword. This is because the error detection performance and the error correction performance are the same, and error correction necessarily requires determining of the specific error codeword.

Because the error correction performance and the error detection performance of the fixed code type are fixed, performance that can be provided by the current FEC cannot meet a requirement. In a specific example, the error detection performance provided by the current FEC technology cannot meet a requirement of the Ethernet standard for MTTFPA. The MTTFPA is a key parameter of the Ethernet standard. A specific requirement of the Ethernet standard for the MTTFPA is that only one error frame can be accepted within the life of universe (life of universe: about 13.8 billion years). In other words, within the life of universe, a communication apparatus is required to detect at most one error frame as a correct data frame.

To make the performance provided by the FEC to meet the requirement, embodiments of this application provide a data processing method and apparatus.

Before the data processing method and apparatus provided in embodiments of this application are described, related content of the FEC and the cyclic code is first described.

### I. Related terms

1. Symbol of a cyclic codeword: a basic unit constituting a cyclic codeword, and also a basic unit for performing encoding and decoding calculation of an RS code. A symbol may include one or more bits, where a quantity of bits included in one symbol may be represented by a letter m, and when m=1, a symbol has the same meaning as a bit.
2. (N, K, T, m) are four parameters of a cyclic code, where
   N represents a length of a cyclic codeword;
   K represents a length of a valid symbol (also referred to as payload) included in a cyclic code;
   T represents a maximum error correction capability of a codeword, that is, a maximum of T symbol errors that can be corrected in one codeword, where T=(N-K)/2; and
   m represents a quantity of bits included in one symbol, and is a positive integer greater than or equal to 1. For BCH, CRC, Fire Code, and the like, m is usually set to 1. For an RS code, m is usually set to a value greater than 1.
3. RS (N, K): an RS code representation, where RS (N, K) represents an RS codeword having a codeword length of N and having a codeword information length of K.
4. Length of an RS codeword: a quantity of symbols included in one RS codeword, usually represented by a letter N.
5. Information length of an RS codeword: a quantity of valid symbols included in one RS codeword, usually represented by a letter K.
6. Redundancy length of an RS codeword: a quantity of redundant symbols included in one RS codeword, usually represented by a letter R, where R=N-K.
7. Hamming distance (Hamming distance, HD): a quantity of different symbols at corresponding locations of two strings of equal length. For a cyclic code, once its encoding scheme is determined, a minimum Hamming distance between encoded codewords is determined. Specifically, a minimum Hamming distance dmin of the cyclic code (N, K, T, m) is equal to N-K+1. For example, for RS (128, 120), a minimum Hamming distance is 9.

### II. Cyclic code encoding and decoding principles

A payload part *M* (*x*) of a cyclic code with a length K can be represented by a polynomial shown in Formula (1): $M \left(x\right) = {m}_{K - 1} ⋅ {x}^{K - 1} + {m}_{K - 2} ⋅ {x}^{K - 2} + ⋯ + {m}_{1} ⋅ x + {m}_{0}$ Formula (1)

A generator polynomial *g* (*x*) of the cyclic code may be shown in Formula (2): $g \left(x\right) = {g}_{N - K} ⋅ {x}^{N - K} + {g}_{N - K - 1} ⋅ {x}^{N - K - 1} + ⋯ + {g}_{1} ⋅ x + {g}_{0}$ Formula (2)

A cyclic code encoding process is to divide M(x) by g(x) to obtain a remainder polynomial P(x). A codeword polynomial *C*(*x*) of a cyclic code can be formed by M(x) and P(x), as shown in Formula (3): $C \left(x\right) = {x}^{N - K} ⋅ M \left(x\right) + p \left(x\right)$ Formula (3)]
*x^{N-K} · M*(*x*) meets the following Formula (4): ${x}^{N - K} ⋅ M \left(x\right) = q \left(x\right) ⋅ g \left(x\right) + p \left(x\right)$ Formula (4)

The following Formula (5) can be obtained by substituting Formula (4) into Formula (3): $C \left(x\right) = q \left(x\right) ⋅ g \left(x\right)$ Formula (5)

It can be learned from Formula (5) that a root of the generator polynomial *g* (*x*) is also a root of the codeword polynomial *C*(*x*)*.*

A polynomial *r*(*x*) received by a cyclic code decoder may be represented by Formula (6): $r \left(x\right) = C \left(x\right) + e \left(x\right) = {r}_{0} + {r}_{1} x + ⋯ + {r}_{n - 1} {x}^{n - 1}$ Formula (6)

In Formula (6), *e*(*x*) represents an error polynomial caused by channel transmission, and may be represented by the following Formula (7): $e \left(x\right) = {e}_{0} + {e}_{1} {x}^{{j}_{0}} + ⋯ + {e}_{ν - 1} {x}^{{j}_{ν - 1}}$ Formula (7)

If no error occurs in the cyclic codeword in a transmission process, *e*(*x*) is 0, and the decoder receives a correct codeword. If an error occurs in the cyclic codeword in the transmission process, *e(x)* is not 0. *α* is a primitive element on *GF*(2*^{m}*) , and *α*^{*b*+*i*} ∈ *GF*(2*^{m}*), *i* = 0, 1, ··· , 2*t*- 1 is the root of the generator polynomial. *GF*(2*^{m}*) is also referred to as a Galois field (Galois field), which is discovered by the French mathematician Evariste Galois. It has multiplication, division, addition, and subtraction operations. These operations comply with specific rules and are closed. In other words, operation results between field elements are still in the field.

As described above, the root of the generator polynomial is also the root of the codeword polynomial. Therefore, the following Formula (8) holds true: $r \left({α}^{b + i}\right) = e \left({α}^{b + i}\right) , i = 0 , 1 , ⋯ , 2 t - 1$ Formula (8)

A purpose of decoding is to determine locations *x*^{*j*₀}, *x*^{*j*₁}, *and x*^{*j*ᵥ₋₁} at which errors occur and corresponding error values, and then add the obtained error polynomial *e(x)* to the received polynomial *r*(*x*) to obtain a correct codeword polynomial.

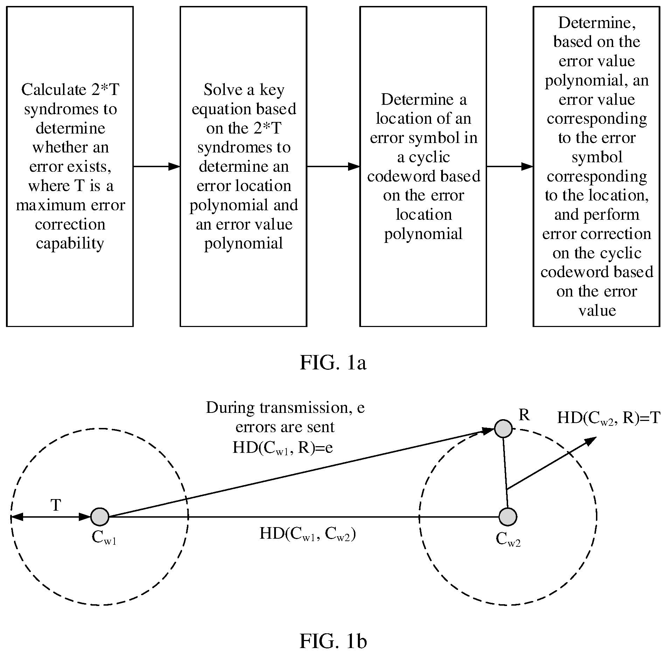

Refer to FIG. 1a. FIG. 1a is a schematic flowchart of cyclic code decoding in a conventional technology. As shown in FIG. 1a, the decoding procedure includes the following four steps.
1. Calculate 2*T syndromes to determine whether an error exists, where T is a maximum error correction capability.
2. Solve a key equation based on the 2*T syndromes to determine an error location polynomial and an error value polynomial.

In an example, the key equation may be solved according to an RiBM (English: Reformulated inversionless Berlekamap-Massey) algorithm.

3. Determine a location of an error symbol in the cyclic codeword based on the error location polynomial.

In an example, the error location polynomial may be processed according to a Chien (Chien) search algorithm, to determine the location of the error symbol in the cyclic codeword.

4. Determine, based on the error value polynomial, an error value corresponding to the error symbol corresponding to the location, and perform error correction on the cyclic codeword based on the error value.

In an example, the error value polynomial may be processed according to a Forney algorithm, to determine the error value.

If the cyclic code (N, K, T, m) operates only in an error detection mode, its error detection performance can reach dmin-1 symbols. For example, if the RS (128, 120) operates only in the error detection mode, its error detection performance can reach eight symbols.

In the conventional technology, both error correction performance and error detection performance of the cyclic code (N, K, T, m) are fixed. Specifically, all the N-K redundant symbols are used for an error correction function, that is, an error correction capability can reach T symbols, where T is the maximum error correction capability of the cyclic code (N, K, T, m). Correspondingly, an error detection capability of the cyclic code is also T symbols. In this manner, a bit error rate of data transmission through a channel can be effectively reduced. For example, before error correction is performed on a received codeword, a bit error rate (bit error rate, BER) is 1e-5. After the foregoing error correction capability is used, the bit error rate can be reduced to 4.2e-15.

However, performance provided in the current manner in which all the N-K redundant symbols are used for the error correction function usually cannot meet a requirement. For example, its error correction performance is redundant, but its error detection performance cannot meet the requirement of the Ethernet standard for the MTTFPA. For example, in some scenarios, the bit error rate only needs to reach 1e-9 or 1e-10, and does not need to reach 4.2e-15.

The inventor of this application finds that, the generator polynomial of the cyclic code (N, K, T, m) may be represented not only in the form of Formula (2), but also in the following Formula (9): $g \left(x\right) = \left(x-{α}^{0}\right) ⋅ \left(x-{α}^{1}\right) ⋅ \left(x-{α}^{2}\right) ⋅ ⋯ \left(x-{α}^{N - K - 1}\right)$ Formula (9)

With reference to Formula (6) and Formula (9), it can be learned that the codeword polynomial C(x) meets the following Formula (10): $C \left({α}^{i}\right) = 0 , i = 0 , 1 , 2 , ⋯ , N - k - 1$ Formula (10)

It can be learned from Formula (10) that *C(x)* may also be considered as the following codewords.
1. *C(x)* is a codeword polynomial whose generator polynomial is ${g}_{T = 1} \left(x\right) = {\prod }_{i = 0}^{2 ∗ T - 1} \left(x-{α}^{i}\right)$, and its error correction capability reaches one symbol.
2. *C(x)* is a codeword polynomial whose generator polynomial is ${g}_{T = 2} \left(x\right) = {\prod }_{i = 0}^{2 ∗ T - 1} \left(x-{α}^{i}\right)$, and its error correction capability reaches two symbols.

### The rest is deduced by analogy.

3. *C(x)* is a codeword polynomial whose generator polynomial is ${g}_{T = \frac{\left(N-K\right)}{2}} \left(x\right) = {\prod }_{i = 0}^{2 ∗ T - 1} \left(x-{α}^{i}\right)$, and its error correction capability reaches $\frac{\left(N-K\right)}{2}$ symbols.

In any one of the foregoing cases, an error correction capability of the *C(x)* is T. Therefore, for a cyclic codeword, if there are T+1 error symbols, the codeword may be corrected to another codeword, that is, erroneous codeword correction occurs. Refer to FIG. 1b. FIG. 1b is a diagram of erroneous codeword correction according to an embodiment of this application.

As shown in FIG. 1b, a codeword C_{w1} becomes a codeword R due to e errors in a transmission process. If an HD between the codeword R and a codeword C_{w2} is less than or equal to T, the codeword R may be erroneously corrected to the codeword C_{w2}. Because the following Formulas (11) to (14) are met, Formula (15) may be obtained. $HD \left({C}_{w 1}, {C}_{w 2}\right) = HW \left({C}_{w 1}⊕{C}_{w 2}\right) = HW \left(\left({C}_{w 1}⊕R\right)⊕\left({C}_{w 2}⊕R\right)\right)$ Formula (11) $HD \left({C}_{w 1}, {C}_{w 2}\right) \leq HW \left({C}_{w 1}⊕R\right) + HW \left({C}_{w 2}⊕R\right)$ Formula (12) $HW \left({C}_{w 1}⊕R\right) = HD \left({C}_{w 1}, R\right) = e$ Formula (13) $HW \left({C}_{w 2}⊕R\right) = HD \left({C}_{w 2}, R\right) = T$ Formula (14) $HD \left({C}_{w 1}, {C}_{w 2}\right) \leq e + T$ Formula (15)

*HD*(*a, b)* represents a Hamming distance between a codeword a and a codeword b. For example, *HD*(*C*_{*w*1}*, C*_{*w*2}) represents a Hamming distance between the codeword C_{w1} and the codeword C_{w2}.

*HW*(*a* ⊕ b) represents exclusive OR calculation on the codeword a and the codeword b. For example, *HW*(*C*_{*w*1} ⊕ *C*_{*w*2}) represents exclusive OR calculation the codeword C_{w1} and the codeword C_{w2}.

It can be learned from Formula (15) that, if erroneous correction occurs, a minimum quantity of caused errors is e+T.

Therefore, as long as e+T is less than dmin (that is, N-K+1) of the cyclic code (N, K, T, m), successful detection can be achieved, and no erroneous correction occurs. In other words, a sum of the error detection capability and the error correction capability can reach dmin-1. Therefore, for the cyclic code (N, K, T, m), if the error correction capability is t1 (t1≤T), the error detection capability of the cyclic code can reach dmin-1-t1 symbols. In other words, the error correction capability and the error detection capability of the cyclic code are not necessarily fixed, but can be allocated. For the cyclic code (N, K, T, m), a capability of "correct t1 and detect (dmin-1-t1)" can be reached. The term "correct t1 and detect (dmin-1-t1)" means that the error correction capability is t1 and the error detection capability is (dmin-1-t1).

The RS (128, 120) is used as an example. If dmin=9, the RS (128, 120) can implement the capabilities of "correct 1 and detect 7", "correct 2 and detect 6", and "correct 3 and detect 5".

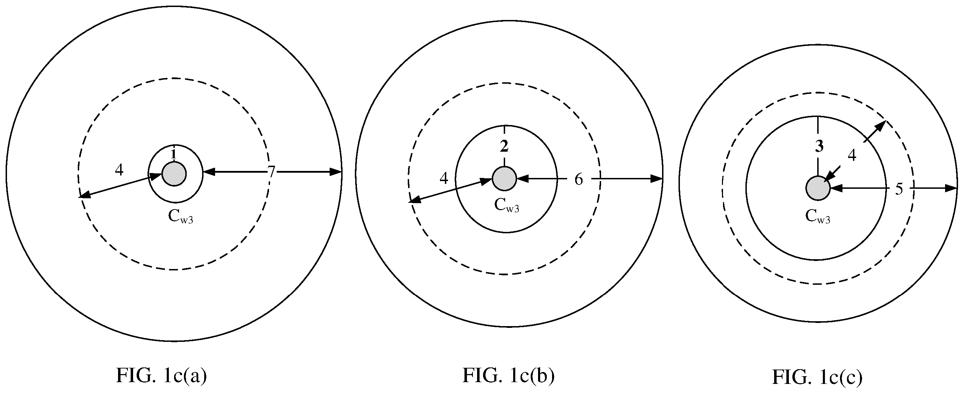

This may be understood with reference to FIG. 1c(a) to FIG. 1c(c). FIG. 1c(a) to FIG. 1c(c) are diagrams of decoding effects according to an embodiment of this application.

As shown in content in FIG. 1c(a), for a codeword C_{w3}, if conventional FEC decoding is used, both a decoding capability and an error correction capability are 4. To be specific, after the codeword C_{w3} is transmitted and becomes a codeword Q, if a Hamming distance between the codeword Q and the codeword C_{w3} is less than or equal to 4, the codeword Q may be corrected. However, when a decoding mode is "correct 1 and detect 7", as long as the Hamming distance between the codeword Q and the codeword C_{w3} is less than or equal to 7, it can be detected that the codeword Q is an error codeword. Certainly, when the Hamming distance between the codeword Q and the codeword C_{w3} is greater than 1, the codeword Q cannot be corrected to C_{w3}.

Similarly, as shown in content in FIG. 1c(b), when the decoding mode is "correct 2 and detect 6", as long as the Hamming distance between the codeword Q and the codeword C_{w3} is less than or equal to 6, it can be detected that the codeword Q is an error codeword. Certainly, when the Hamming distance between the codeword Q and the codeword C_{w3} is greater than 2, the codeword Q cannot be corrected to C_{w3}.

Similarly, as shown in content in FIG. 1c(c), when the decoding mode is "correct 3 and detect 5", as long as the Hamming distance between the codeword Q and the codeword C_{w3} is less than or equal to 5, it can be detected that the codeword Q is an error codeword. Certainly, when the Hamming distance between the codeword Q and the codeword C_{w3} is greater than 3, the codeword Q cannot be corrected to C_{w3}.

In view of this, embodiments of this application provide a data processing method. For a cyclic code determined based on a specific code type, an error correction capability and an error detection capability of the cyclic code may be flexibly allocated, so that performance provided by the cyclic code can meet a requirement.

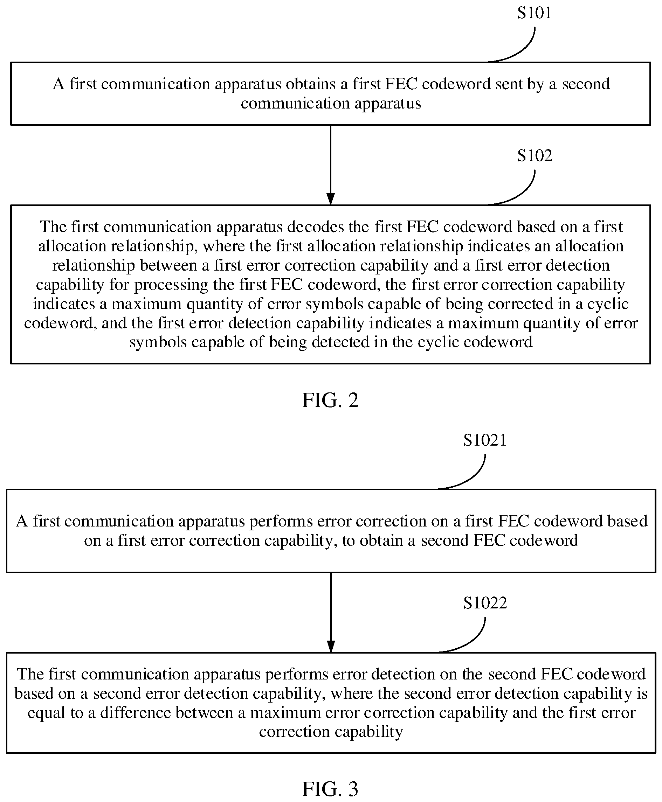

The following describes, with reference to FIG. 2, the data processing method provided in embodiments of this application. FIG. 2 is a schematic flowchart of a data processing method according to an embodiment of this application.

The method shown in FIG. 2 may be applied to a first communication apparatus. Communication apparatuses (for example, the first communication apparatus and a second communication apparatus) mentioned in embodiments of this application each may be a network device like a switch or a router, or may be a part of components on the network device, for example, a board or a line card on the network device, or may be a functional module on the network device, or may be a chip (for example, a physical layer (physical, PHY) chip) configured to implement the method in this application, or may be a server, an optical module, or the like. This is not specifically limited in embodiments of this application. The communication apparatuses may be directly connected to each other through, for example, but not limited to, an Ethernet cable or an optical cable.

The method shown in FIG. 2 may include the following S101 and S102.

S101: The first communication apparatus obtains a first FEC codeword transmitted by the second communication apparatus.

In this embodiment of this application, the second communication apparatus may send the first FEC codeword to the first communication apparatus. Correspondingly, the first communication apparatus may receive the first FEC codeword sent by the second communication apparatus. The first FEC codeword may be a specific-type cyclic codeword. For example, the first FEC codeword may be an RS codeword. For another example, the first FEC codeword may be a CRC codeword, a BCH codeword, or a fire codeword. In a specific example, when the first FEC codeword is an RS codeword, the first FEC codeword may be specifically, for example, RS (128, 120). To be specific, the first FEC codeword includes 128 symbols in total, where 120 symbols are information symbols, and the other 8 symbols are redundant symbols.

In an example, the first communication apparatus may be a network device serving as a receiver, and correspondingly, the second communication apparatus may be a network device serving as a transmitter.

In another example, the first communication apparatus and the second communication apparatus may belong to a same network device. In a specific example, the first communication apparatus may be an optical module on the network device, and the second communication apparatus may be a PHY chip on the network device. In another specific example, the first communication apparatus and the second communication apparatus may be two different PHY chips on the network device. For example, the first communication apparatus is a first PHY chip on the network device, and the second communication apparatus is a second PHY chip on the network device.

S102: The first communication apparatus decodes the first FEC codeword based on a first allocation relationship, where the first allocation relationship indicates an allocation relationship between a first error correction capability and a first error detection capability for processing the first FEC codeword, the first error correction capability indicates a maximum quantity of error symbols capable of being corrected in a cyclic codeword, and the first error detection capability indicates a maximum quantity of error symbols capable of being detected in a cyclic codeword.

After obtaining the first FEC codeword, the first communication apparatus does not decode the first FEC codeword based on a conventional FEC decoding scheme, but decodes the first FEC codeword based on the flexibly allocated first allocation relationship. For example, the first FEC codeword is the RS (128, 120). A maximum error correction capability corresponding to the RS (128, 120) is 4, and correspondingly, an error detection capability of the RS (128, 120) is also 4. In other words, a maximum of four error symbols can be corrected by using the RS (128, 120). When a quantity of error symbols in a codeword is less than or equal to 4, it can be detected that an error occurs in the codeword. The first communication apparatus does not decode the first FEC codeword by using a maximum decoding capability, but decodes the first FEC codeword based on the flexibly allocated first allocation relationship.

The first allocation relationship indicates the allocation relationship between the first error correction capability and the first error detection capability for processing the first FEC codeword. The first error correction capability indicates the maximum quantity of error symbols capable of being corrected in the cyclic codeword. For example, the first error correction capability is a first quantity, indicating that when a quantity of error symbols in the cyclic codeword is less than or equal to the first quantity, the error symbols can be corrected to correct symbols. The first error detection capability indicates the maximum quantity of error symbols capable of being detected in the cyclic codeword. For example, the first error detection capability is a second quantity, indicating that when a quantity of error symbols in the cyclic codeword is less than or equal to the second quantity, it can be detected that an error occurs in the cyclic codeword. In other words, in this embodiment of this application, an error correction capability and an error detection capability for decoding the cyclic codeword may be flexibly allocated, so that performance provided by an FEC technology can meet a requirement.

The first error correction capability and the first error detection capability are not specifically limited in embodiments of this application. It can be learned from the foregoing descriptions of the cyclic code that the error correction capability and the error detection capability corresponding to the conventional FEC decoding scheme are the same, and the error correction capability is a maximum error correction capability. In this embodiment of this application, in some scenarios, when the conventional FEC decoding scheme is used, error correction performance is redundant, but error detection performance cannot meet a requirement of the Ethernet standard for MTTFPA. Therefore, to make error detection performance provided by the FEC meet the requirement of the Ethernet standard for the MTTFPA as much as possible, a redundant error correction capability may be reduced based on the conventional FEC decoding scheme. However, because a sum of the error correction capability and the error detection capability is equal to dmin-1, reducing the redundant error correction capability can improve the error detection capability. Therefore, in an example, the first error correction capability may be less than the first error detection capability. In other words, the first quantity may be less than the second quantity. For example, if the first FEC codeword is the RS (128, 120), it can be learned from the foregoing descriptions that a sum of the first quantity and the second quantity is equal to 8. Therefore, in an example, the first quantity may be 1, and the second quantity may be 7; in another example, the first quantity may be 2, and the second quantity may be 6; and in another example, the first quantity may be 3, and the second quantity may be 5.

Certainly, the first error correction capability and the first error detection capability may alternatively be the same. For example, both the first error correction capability and the first error detection capability are 4. This is not specifically limited in embodiments of this application.

In an example, the first allocation relationship may be manually specified by a user.

In another example, the first allocation relationship may alternatively be determined based on link quality between the first communication apparatus and the second communication apparatus. To be specific, the first communication apparatus may dynamically adjust, based on the link quality, an allocation relationship between an error correction capability and an error detection capability for processing the specific-type cyclic codeword, to obtain the first allocation relationship, so that when the specific-type cyclic codeword is decoded based on the first allocation relationship, the obtained link quality meets a link quality requirement.

The link quality mentioned in this embodiment of this application includes but is not limited to any parameter that can reflect the link quality. In a specific example, because a link bit error rate and a quantity of data frame retransmissions may reflect the link quality, the link quality may include the link bit error rate and/or the quantity of data frame retransmissions. Correspondingly, that the link quality meets the link quality requirement may be that the link bit error rate meets a bit error rate requirement and/or the quantity of data frame retransmissions meets a retransmission quantity requirement. For example, that the link quality meets the link quality requirement may be that the link bit error rate is less than a bit error rate threshold, and/or the quantity of data frame retransmissions is less than a retransmission quantity threshold.

In a specific example, the first allocation relationship may be obtained by adjusting a third allocation relationship. The third allocation relationship indicates an allocation relationship between a second error correction capability and a third error detection capability for processing the specific-type cyclic codeword. The second error correction capability and the third error detection capability are not specifically limited in embodiments of this application. In an example, the second error correction capability may be a maximum error correction capability for processing the specific-type cyclic codeword. Correspondingly, the third error detection capability is equal to the second error correction capability. For example, if the specific-type cyclic codeword is the RS (128, 120), both the second error correction capability and the third error detection capability are 4. Certainly, the second error correction capability may alternatively be less than the third error detection capability. This is not specifically limited in embodiments of this application.

In an example, if the third allocation relationship meets the link quality requirement, it indicates that the second error correction capability meets the requirement, and even is redundant. Therefore, the second error correction capability in the third allocation relationship may be reduced, to improve the third error detection capability in the third allocation relationship, so as to obtain the first allocation relationship. For example, this may be understood with reference to the following Table 1.

**Table 1**

| Allocation relationship | Error correction/detection capability | |
|---|---|---|
| Third allocation relationship | Second error correction capability | 4 |
| | Third error detection capability | 4 |
| First allocation relationship | First error correction capability | 3 |
| | First error detection capability | 5 |

It can be learned from Table 1 that both the second error correction capability and the third error detection capability in the third allocation relationship are four symbols. When the third allocation relationship meets the link quality requirement, the second error correction capability is reduced to obtain the first error correction capability. Correspondingly, the third error detection capability is improved to the first error detection capability.

That the third allocation relationship meets the link quality requirement may be understood as that, when the specific-type cyclic codeword is decoded based on the third allocation relationship, the link quality between the first communication apparatus and the second communication apparatus meets the link quality requirement.

In an example, if the first allocation relationship meets the link quality requirement, that is, when the specific-type cyclic codeword is decoded based on the first allocation relationship, the link quality between the first communication apparatus and the second communication apparatus meets the link quality requirement, to further improve error correction performance to make error detection performance provided by the FEC meet the requirement of the Ethernet standard for the MTTFPA as much as possible, the first error correction capability in the first allocation relationship may be further reduced, to improve the first error detection capability in the first allocation relationship, so as to obtain a second allocation relationship. In this way, the specific-type cyclic codeword is subsequently decoded based on the second allocation relationship. The second allocation relationship may indicate an allocation relationship between a third error correction capability and a fourth error detection capability for processing the specific-type cyclic codeword. It is not difficult to understand that, because the first error correction capability is reduced, when the specific-type cyclic codeword is processed based on the second allocation relationship, the link quality between the first communication apparatus and the second communication apparatus is reduced. In this embodiment of this application, the first error correction capability is not reduced without limitation. Instead, it may be controlled that the second allocation relationship can still meet the link quality requirement after the first error correction capability is reduced.

**Table 2**

| Allocation relationship | Error correction/detection capability | |
|---|---|---|
| First allocation relationship | First error correction capability | 3 |
| | First error detection capability | 5 |
| Second allocation relationship | Third error correction capability | 2 |
| | Fourth error detection capability | 6 |

In this embodiment of this application, in a specific implementation, for example, S102 may include S1021 and S1022 shown in FIG. 3. FIG. 3 is a schematic flowchart of decoding according to an embodiment of this application.

S1021: The first communication apparatus performs error correction on the first FEC codeword based on the first error correction capability, to obtain a second FEC codeword.

For ease of description, t1 represents the first quantity, that is, the first error correction capability is t1. In a specific implementation, S1021 may include the following steps.

First, 2*t1 syndromes are calculated based on the first FEC codeword. For a syndrome calculation method, a conventional syndrome calculation manner may be used, and details are not described herein.

Then, a key equation is solved based on the 2*t1 syndromes to determine an error location polynomial and an error value polynomial. In an example, the key equation may be solved according to an RiBM algorithm.

Further, a location of an error symbol in the first FEC codeword is determined based on the error location polynomial. In an example, the error location polynomial may be processed according to a Chien search algorithm, to determine the location of the error symbol in the first FEC codeword. In addition, an error value corresponding to the error symbol corresponding to the location is determined based on the error value polynomial, and error correction is performed on the first FEC codeword based on the error value, to obtain the second FEC codeword. In an example, the error value polynomial may be processed according to a Forney algorithm, to determine the error value.

For how to solve the key equation according to the RiBM algorithm, how to process the error location polynomial according to the Chien search algorithm, and how to process the error value polynomial according to the Forney algorithm, a conventional processing manner may be used. Details are not described herein.

S1022: The first communication apparatus performs error detection on the second FEC codeword based on the second error detection capability, where the second error detection capability is equal to a difference between a maximum error correction capability and the first error correction capability.

After the second FEC codeword is obtained, error detection may be further performed on the second FEC codeword based on the second error detection capability. The second error detection capability is equal to the difference between the maximum error correction capability T and the first error correction capability t1. Because the sum of the first error correction capability and the first error detection capability is equal to twice the maximum error correction capability, the second error detection capability is also equal to a half of the difference between the first error detection capability and the first error correction capability.

For ease of description, P represents the second error detection capability, that is, the second error detection capability is P. In this case, in a specific implementation of S1022, the 2*P syndromes may be calculated based on the second FEC codeword. Further, it is determined, based on the 2*P syndromes, whether an error exists in the second FEC codeword. Specifically, if all the 2*P syndromes are 0, it may be determined that the second FEC codeword includes no error codeword; or if not all the 2*P syndromes are 0, it may be determined that the second FEC codeword includes an error codeword. In other words, if all the 2*P syndromes are 0, an obtained error detection result is that the second FEC codeword includes no error codeword. If not all the 2*P syndromes are 0, an obtained error detection result is that the second FEC codeword includes an error codeword. In other words, the error detection result obtained by performing S1022 may indicate whether an error occurs in the second FEC codeword (that is, whether the second FEC codeword includes an error codeword), but cannot indicate a specific error codeword in the second FEC codeword. In another example, a key equation may be further solved based on the 2*P syndromes to determine an error location polynomial, so as to determine the specific error codeword in the second FEC codeword.

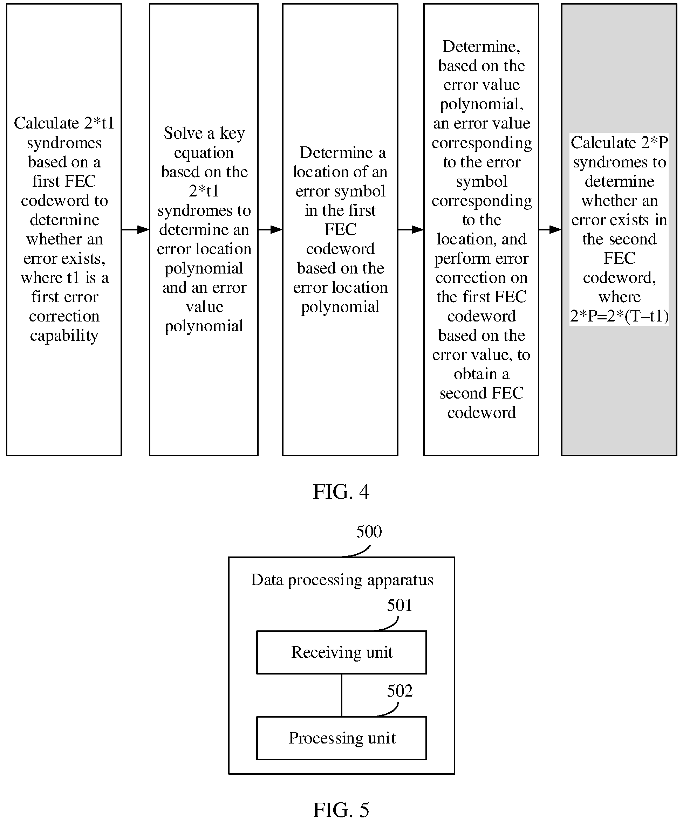

Next, a specific implementation of S102 is described with reference to a decoding flowchart shown in FIG. 4. FIG. 4 is another schematic flowchart of decoding according to an embodiment of this application.

As shown in FIG. 4, the decoding procedure includes the following four steps.
1. Calculate 2*t1 syndromes based on the first FEC codeword to determine whether an error exists, where t1 is the first error correction capability.
2. Solve a key equation based on the 2*t1 syndromes to determine an error location polynomial and an error value polynomial.

In an example, the key equation may be solved according to the RiBM algorithm.

3. Determine a location of an error symbol in the first FEC codeword based on the error location polynomial.

In an example, the error location polynomial may be processed according to the Chien (Chien) search algorithm, to determine the location of the error symbol in the cyclic codeword.

4. Determine, based on the error value polynomial, an error value corresponding to the error symbol corresponding to the location, and perform error correction on the first FEC codeword based on the error value, to obtain the second FEC codeword.

In an example, the error value polynomial may be processed according to the Forney algorithm, to determine the error value.

5. Calculate the 2*P syndromes to determine whether an error exists in the second FEC codeword, where 2*P=2*(T-t1).

It can be learned from comparison between FIG. 4 and FIG. 1a that, in comparison with the decoding procedure in the conventional technology, in the decoding procedure in this application, a syndrome calculation part in the conventional technology is split into two parts. In an error correction phase, a quantity of calculated syndromes is reduced (2*T is reduced to 2*P). Correspondingly, a quantity of processed syndromes in the error correction phase is reduced, and correspondingly, decoding power consumption is reduced.

Based on the data processing method provided in the foregoing method embodiments, an embodiment of this application further provides a corresponding data processing apparatus. FIG. 5 is a diagram of a structure of the data processing apparatus according to an embodiment of this application. The data processing apparatus 500 shown in FIG. 5 may be used in the first communication apparatus in the foregoing method embodiments, and is configured to perform the data processing method performed by the first communication apparatus provided in the foregoing method embodiments.

As shown in FIG. 5, the data processing apparatus 500 includes a receiving unit 501 and a processing unit 502.

The receiving unit 501 is configured to obtain a first forward error correction FEC codeword transmitted by a second communication apparatus.

The processing unit 502 is configured to decode the first FEC codeword based on a first allocation relationship, where the first allocation relationship indicates an allocation relationship between a first error correction capability and a first error detection capability for processing the first FEC codeword, the first error correction capability indicates a maximum quantity of error symbols capable of being corrected in a cyclic codeword, and the first error detection capability indicates a maximum quantity of error symbols capable of being detected in a cyclic codeword.

In a possible implementation, the first error correction capability is less than the first error detection capability.

In a possible implementation, the first allocation relationship is determined based on link quality between the first communication apparatus and the second communication apparatus.

In a possible implementation, the first allocation relationship meets a link quality requirement, and the processing unit 502 is further configured to: reduce the first error correction capability in the first allocation relationship and improve the first error detection capability in the first allocation relationship, to obtain a second allocation relationship, where the second allocation relationship meets the link quality requirement.

In a possible implementation, the link quality includes: a link bit error rate and/or a quantity of data frame retransmissions.

In a possible implementation, the processing unit 502 is configured to: perform error correction on the first FEC codeword based on the first error correction capability, to obtain a second FEC codeword; and perform error detection on the second FEC codeword based on a second error detection capability, where the second error detection capability is equal to a difference between a maximum error correction capability and the first error correction capability.

In a possible implementation, performing error detection on the second FEC codeword based on the second error detection capability includes: calculating 2*P syndromes based on the second FEC codeword, where P corresponds to the second error detection capability; and if all the 2*P syndromes are 0, determining that the second FEC codeword includes no error codeword; or if not all the 2*P syndromes are 0, determining that the second FEC codeword includes an error codeword.

In a possible implementation, the first FEC codeword is a Reed-Solomon RS codeword.

In a possible implementation, a sum of the first error correction capability and the first error detection capability is equal to dmim-1, and dmin is a minimum Hamming distance between RS codes.

In a possible implementation, when the first FEC codeword is RS (128, 120), the first error correction capability is 1, and the first error detection capability is 7; or the first error correction capability is 2, and the first error detection capability is 6; or the first error correction capability is 3, and the first error detection capability is 5; or the first error correction capability is 4, and the first error detection capability is 4.

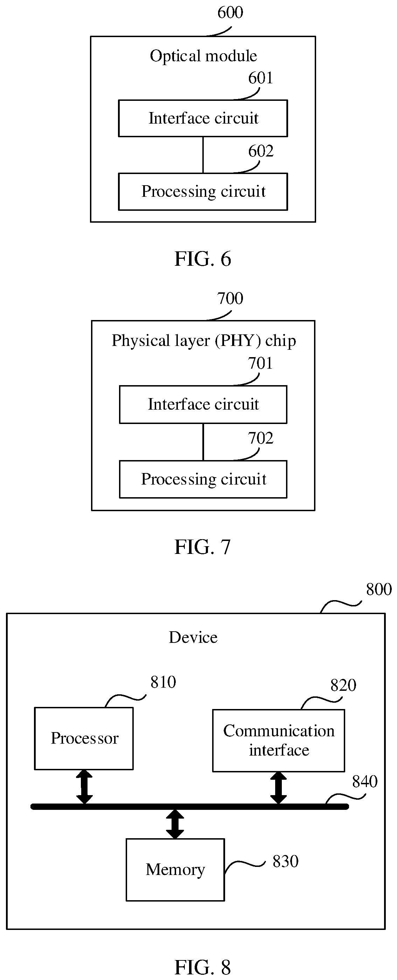

Based on the data processing method provided in the foregoing method embodiments, an embodiment of this application further provides an optical module. FIG. 6 is a diagram of a structure of the optical module according to an embodiment of this application. The optical module 600 shown in FIG. 6 may correspond to the first communication apparatus in the foregoing method embodiments, and is configured to perform the data processing method performed by the first communication apparatus provided in the foregoing method embodiments.

As shown in FIG. 6, the optical module 600 includes an interface circuit 601 and a processing circuit 602.

The interface circuit 601 is configured to receive and/or send data, and the processing circuit 602 is configured to process the data.

In a specific example, the interface circuit 601 is configured to obtain a first forward error correction FEC codeword transmitted by a second communication apparatus.

The processing circuit 602 is configured to decode the first FEC codeword based on a first allocation relationship, where the first allocation relationship indicates an allocation relationship between a first error correction capability and a first error detection capability for processing the first FEC codeword, the first error correction capability indicates a maximum quantity of error symbols capable of being corrected in a cyclic codeword, and the first error detection capability indicates a maximum quantity of error symbols capable of being detected in a cyclic codeword.

For specific implementations of the interface circuit 601 and the processing circuit 602, refer to the related descriptions in the foregoing method embodiments. Details are not described herein again.

Based on the data processing method provided in the foregoing method embodiments, an embodiment of this application further provides a PHY chip. FIG. 7 is a diagram of a structure of the PHY chip according to an embodiment of this application. The PHY chip 700 shown in FIG. 7 may correspond to the first communication apparatus in the foregoing method embodiments, and is configured to perform the data processing method performed by the first communication apparatus provided in the foregoing method embodiments.

As shown in FIG. 7, the PHY chip 700 includes an interface circuit 701 and a processing circuit 702.

The interface circuit 701 is configured to receive and/or send data, and the processing circuit 702 is configured to process the data.

In a specific example, the interface circuit 701 is configured to obtain a first forward error correction FEC codeword transmitted by a second communication apparatus.

The processing circuit 702 is configured to decode the first FEC codeword based on a first allocation relationship, where the first allocation relationship indicates an allocation relationship between a first error correction capability and a first error detection capability for processing the first FEC codeword, the first error correction capability indicates a maximum quantity of error symbols capable of being corrected in a cyclic codeword, and the first error detection capability indicates a maximum quantity of error symbols capable of being detected in a cyclic codeword.

For specific implementations of the interface circuit 701 and the processing circuit 702, refer to the related descriptions in the foregoing method embodiments. Details are not described herein again.

It should be noted that hardware structures of the data processing apparatus 500, the optical module 600, and the PHY chip 700 mentioned above may all be a structure shown in FIG. 8. FIG. 8 is a diagram of a structure of a device according to an embodiment of this application.

As shown in FIG. 8, a device 800 includes a processor 810, a communication interface 820, and a memory 830. There may be one or more processors 810 in the device 800. FIG. 8 shows one processor as an example. In this embodiment of this application, the processor 810, the communication interface 820, and the memory 830 may be connected through a bus system or in another manner. In FIG. 8, a bus system 840 is used for connection.

The processor 810 may be a central processing unit (central processing unit, CPU), an NP, or a combination of a CPU and an NP. The processor 810 may further include a hardware chip. The hardware chip may be an ASIC, a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof.

The memory 830 may include a volatile memory (English: volatile memory), for example, a random access memory (random access memory, RAM). Alternatively, the memory 830 may include a non-volatile memory (English: non-volatile memory), for example, a flash memory (English: flash memory), a hard disk drive (hard disk drive, HDD), or a solid-state drive (solid-state drive, SSD). Alternatively, the memory 830 may include a combination of the foregoing types of memories. For example, the memory 830 may store the foregoing first allocation relationship.

Optionally, the memory 830 stores an operating system, a program, an executable module or a data structure, a subset thereof, or an extended set thereof. The program may include various operation instructions to implement various operations. The operating system may include various system programs, to implement various basic services and process a hardware-based task. The processor 810 may read a program in the memory 830, to implement the data processing method provided in embodiments of this application.

The bus system 840 may be a peripheral component interconnect (peripheral component interconnect, PCI) bus, an extended industry standard architecture (extended industry standard architecture, EISA) bus, or the like. The bus system 840 may be classified as an address bus, a data bus, a control bus, or the like. For ease of representation, only one thick line is used for representation in FIG. 8, but this does not mean that there is only one bus or only one type of bus.

An embodiment of this application provides a computer-readable storage medium, including instructions or a computer program. When the instructions or the computer program is run on a computer, the computer is caused to perform the method in the foregoing method embodiments.

An embodiment of this application provides a computer program product including instructions or a computer program. When the computer program product runs on a computer, the computer is caused to perform the method in the foregoing method embodiments.

In the specification, claims, and accompanying drawings of this application, the terms "first", "second", "third", "fourth", and the like (if existent) are intended to distinguish between similar objects but do not necessarily indicate a specific order or sequence. It should be understood that the data termed in such a way is interchangeable in an appropriate circumstance, so that embodiments described herein can be implemented in another order than the order illustrated or described herein. Moreover, the terms "include", "have" and any other variants mean to cover the non-exclusive inclusion, for example, a process, method, system, product, or device that includes a list of steps or units is not necessarily limited to those steps or units, but may include other steps or units not expressly listed or inherent to such a process, method, product, or device.

It may be clearly understood by persons skilled in the art that, for convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in another manner. For example, the described apparatus embodiments are merely examples. For example, division into the units is merely logical service division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one location, or may be distributed on a plurality of network units. Some or all of the units may be selected based on an actual requirement to achieve objectives of the solutions of embodiments.

In addition, service units in embodiments of this application may be integrated into one processing unit, or each of the units may exist alone physically, or two or more units may be integrated into one unit. The integrated unit may be implemented in a form of hardware, or may be implemented in a form of a software service unit.

When the integrated unit is implemented in the form of a software service unit and sold or used as an independent product, the integrated unit may be stored in a computer-readable storage medium. Based on such an understanding, the technical solutions of this application essentially, or the part contributing to the conventional technology, or some or all of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The storage medium includes various media that can store program code, such as a USB flash drive, a portable hard disk drive, a read-only memory (read-only memory, ROM), a random access memory (random access memory, RAM), a magnetic disk, and an optical disc.

Persons skilled in the art should be aware that, in one or more of the foregoing examples, the service described in the present invention may be implemented by hardware, software, firmware, or any combination thereof. When software is used for implementation, the services may be stored in a computer-readable medium or transmitted as one or more instructions or code on the computer-readable medium. The computer-readable medium includes a computer storage medium and a communication medium. The communication medium includes any medium that enables a computer program to be transmitted from one place to another. The storage medium may be any available medium that can be accessed by a general-purpose or dedicated computer.

The objectives, technical solutions, and benefits of the present invention are further described in detail in the foregoing specific implementations. It should be understood that the foregoing descriptions are merely specific implementations of the present invention.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of this application.

## Claims

1. A data processing method, wherein the method comprises:
obtaining, by a first communication apparatus, a first forward error correction FEC codeword transmitted by a second communication apparatus; and
decoding, by the first communication apparatus, the first FEC codeword based on a first allocation relationship, wherein the first allocation relationship indicates an allocation relationship between a first error correction capability and a first error detection capability for processing the first FEC codeword, the first error correction capability indicates a maximum quantity of error symbols capable of being corrected in a cyclic codeword, and the first error detection capability indicates a maximum quantity of error symbols capable of being detected in a cyclic codeword.

2. The method according to claim 1, wherein the first error correction capability is less than the first error detection capability.

3. The method according to claim 1 or 2, wherein the first allocation relationship is determined based on link quality between the first communication apparatus and the second communication apparatus.

4. The method according to claim 3, wherein the first allocation relationship meets a link quality requirement, and the method further comprises:
reducing the first error correction capability in the first allocation relationship and increasing the first error detection capability in the first allocation relationship, to obtain a second allocation relationship, wherein the second allocation relationship meets the link quality requirement.

5. The method according to claim 3 or 4, wherein the link quality comprises:
a link bit error rate and/or a quantity of data frame retransmissions.

6. The method according to claim 2, wherein decoding, by the first communication apparatus, the first FEC codeword based on the first allocation relationship comprises:
performing, by the first communication apparatus, error correction on the first FEC codeword based on the first error correction capability, to obtain a second FEC codeword; and
performing, by the first communication apparatus, error detection on the second FEC codeword based on a second error detection capability, wherein the second error detection capability is equal to a difference between a maximum error correction capability and the first error correction capability.

7. The method according to claim 6, wherein performing, by the first communication apparatus, error detection on the second FEC codeword based on the second error detection capability comprises:
calculating, by the first communication apparatus, 2*P syndromes based on the second FEC codeword, wherein P corresponds to the second error detection capability; and
if all the 2*P syndromes are 0, determining, by the first communication apparatus, that the second FEC codeword comprises no error codeword; or
if not all the 2*P syndromes are 0, determining, by the first communication apparatus, that the second FEC codeword comprises an error codeword.

8. The method according to any one of claims 1 to 7, wherein the first FEC codeword is:
a Reed-Solomon RS codeword.

9. The method according to claim 8, wherein a sum of the first error correction capability and the first error detection capability is equal to dmin-1, and dmin is a minimum Hamming distance between RS codes.

10. The method according to claim 8, wherein when the first FEC codeword is RS (128, 120), the first error correction capability is 1, and the first error detection capability is 7; or
the first error correction capability is 2, and the first error detection capability is 6; or
the first error correction capability is 3, and the first error detection capability is 5; or
the first error correction capability is 4, and the first error detection capability is 4.

11. A data processing apparatus, used in a first communication apparatus, wherein the first communication apparatus comprises a receiving unit and a processing unit;
the receiving unit is configured to obtain a first forward error correction FEC codeword transmitted by a second communication apparatus; and
the processing unit is configured to decode the first FEC codeword based on a first allocation relationship, wherein the first allocation relationship indicates an allocation relationship between a first error correction capability and a first error detection capability for processing the first FEC codeword, the first error correction capability indicates a maximum quantity of error symbols capable of being corrected in a cyclic codeword, and the first error detection capability indicates a maximum quantity of error symbols capable of being detected in a cyclic codeword.

12. The apparatus according to claim 11, wherein the first error correction capability is less than the first error detection capability.

13. The apparatus according to claim 11 or 12, wherein the first allocation relationship is determined based on link quality between the first communication apparatus and the second communication apparatus.

14. The apparatus according to claim 13, wherein the first allocation relationship meets a link quality requirement, and the processing unit is further configured to:
reduce the first error correction capability in the first allocation relationship and improve the first error detection capability in the first allocation relationship, to obtain a second allocation relationship, wherein the second allocation relationship meets the link quality requirement.

15. The apparatus according to claim 13 or 14, wherein the link quality comprises:
a link bit error rate and/or a quantity of data frame retransmissions.

16. The apparatus according to claim 12, wherein the processing unit is configured to:
perform error correction on the first FEC codeword based on the first error correction capability, to obtain a second FEC codeword; and
perform error detection on the second FEC codeword based on a second error detection capability, wherein the second error detection capability is equal to a difference between a maximum error correction capability and the first error correction capability.

17. The apparatus according to claim 16, wherein performing error detection on the second FEC codeword based on the second error detection capability comprises:
calculating 2*P syndromes based on the second FEC codeword, wherein P corresponds to the second error detection capability; and
if all the 2*P syndromes are 0, determining that the second FEC codeword comprises no error codeword; or
if not all the 2*P syndromes are 0, determining that the second FEC codeword comprises an error codeword.

18. The apparatus according to any one of claims 11 to 17, wherein the first FEC codeword is:
a Reed-Solomon RS codeword.

19. The apparatus according to claim 18, wherein a sum of the first error correction capability and the first error detection capability is equal to dmin-1, and dmin is a minimum Hamming distance between RS codes.

20. The apparatus according to claim 18, wherein when the first FEC codeword is RS (128, 120),
the first error correction capability is 1, and the first error detection capability is 7; or
the first error correction capability is 2, and the first error detection capability is 6; or
the first error correction capability is 3, and the first error detection capability is 5; or
the first error correction capability is 4, and the first error detection capability is 4.

21. A communication apparatus, wherein the communication apparatus comprises an interface circuit and a processing circuit;
the interface circuit is configured to obtain a first forward error correction FEC codeword transmitted by a second communication apparatus; and
the processing circuit is configured to decode the first FEC codeword based on a first allocation relationship, wherein the first allocation relationship indicates an allocation relationship between a first error correction capability and a first error detection capability for processing the first FEC codeword, the first error correction capability indicates a maximum quantity of error symbols capable of being corrected in a cyclic codeword, and the first error detection capability indicates a maximum quantity of error symbols capable of being detected in a cyclic codeword.

22. The communication apparatus according to claim 21, wherein the communication apparatus is:
an optical module or a physical layer PHY chip.

23. A device, comprising a processor and a memory, wherein
the memory is configured to store instructions or a computer program; and
the processor is configured to execute the instructions or the computer program to perform the method according to any one of claims 1 to 10.

24. A computer-readable storage medium, comprising instructions or a computer program, wherein when the instructions or the computer program is executed by a computer, the computer is caused to perform the method according to any one of claims 1 to 10.

25. A computer program product, comprising a computer program, wherein when the computer program is run on a processor, the method according to any one of claims 1 to 10 is performed.
